# EUROPEAN PATENT SPECIFICATION

(11) **EP 2 638 285 B1**
(45) Date of publication and mention of the grant of the patent: **10.05.2017**
(21) Application number: 11815925.0
(22) Date of filing: 30.09.2011
(51) Int. Cl.: F03G 4/00, F03G 7/04, F24J 3/08

(54) **ISAAKIDIS HIGH TEMPRATURE ENGINEERED GEOTHERMAL SYSTEMS (EGS)**
HOCHTEMPRATURMANIPULIERTE GEOTHERMISCHE SYSTEME NACH ISAAKIDIS
SYSTÈMES GÉOTHERMIQUES (EGS, ENGINEERED GEOTHERMAL SYSTEMS) HAUTE TEMPÉRATURE ISAAKIDIS

(43) Date of publication of application: 18.09.2013
(73) Proprietor: Isaakidis, Ignatious, Doncaster East, Victoria 3109 (AU)
(72) Inventor: Isaakidis, Ignatious, Doncaster East, Victoria 3109 (AU)
(74) Representative: Potter Clarkson LLP
(86) International application number: PCT/AU2011/001292
(87) International publication number: WO 2012/019249

(56) References cited:
- EP-A2- 1 972 869
- WO-A2-2010/016920
- JP-A- 2001 131 905
- KR-A- 20070 003 504
- US-A- 4 674 561
- US-A- 5 244 037
- US-A- 5 372 016
- US-A- 5 941 238
- US-A- 6 073 448
- US-A1- 2005 006 049
- US-A1- 2005 006 049
- US-A1- 2010 031 653
- US-B2- 7 753 122

## Description

### FIELD OF THE INVENTION:

This invention relates to steps and improvements in harnessing the geothermal high temperatures deep below or anywhere beneath the earth's surface. The conventional use of geothermal ENERGY is to pump cold water into the earth's interior through the use of "geothermal wells" or "geothermal boreholes". The hot water is then pumped to the surface and used for household heating or creating small quantities of electricity. The **ISAAKIDIS HIGH TEMPRATURE ENGINEERED GEOTHERMAL SYSTEMS** provides an alternate way of trapping the ENERGY in the earth's interior and heating Material that in turn creates geothermally heated material, steam and pressure. The geothermally heated material, steam and pressure are returned to the earth's surface where it may be used for a myriad of purposes such as refining oil, turning turbines, pushing pistons and other multi purpose utilities and variable applications, which are other than the conventional use of household heating and low power generation. The invention includes steps over what was known previously regarding the use of geothermal energy.

### BACKGROUND TO THE INVENTION:

For many years, the conventional use of geothermal ENERGY had been used for household heating and low power generation. With the effects of global warming and carbon emissions, there is a need to find alternate reusable power generation. The geothermal ENERGY, which is in constant supply deep below or anywhere beneath the earth's surface, may be utilised for a number of uses such as:
a) Providing **renewable** energy;
b) Generating **CARBON-FREE** electricity;
c) To **refine/extract oil** using heated liquids/material in the petroleum industry or refine/extract any other materials;
d) Creating steam and other material to refine oil;
e) Creating cleaner coal;
f) Creating steam and other material to produce linear or rotary motion;
g) Creating air or gas pressure to produce linear or rotary motion;
h) Creating hydraulic pressure to produce linear or rotary motion;
i) Creating pneumatic pressure to produce linear or rotary motion;
j) Creating **ENERGY** or gas or pressure or a suitable medium/material for any domestic or industrial use;
k) Creating cyclic compression and expansion of air or other gas and providing a medium at varying temperature levels to enable the conversion of heat energy to mechanical work

The existing uses of geothermal ENERGY accordingly have a limited use in that they have been used for conventional use of household heating and low power generation.

The limitation of existing usages is that it serves a dual function - heating of homes and low scale power generation. This invention relates to an innovative design of devices to harness the geothermal ENERGY in the earth's interior for multi function purposes

US 5,244,037 A discloses a closed loop, pressurized system for a ground source heat pump and a pressure/liquid source module. US 6,073,448 A discloses a geothermal energy conversion system that extracts heat from a heat source below the Earth's surface, which has a temperature above that of a fluid circulating through a closed system. US 2005/006049 A1 discloses a ground source heat exchange system that includes an upstream manifold and a downstream manifold. JP 2001/131905 A discloses a convection circulation snow melting device that uses a geothermal resource as natural energy.

There is therefore a need for devices that are capable of harnessing the high temperatures that exist deep below or anywhere in the earth's interior to be utilised on the earth's surface for multiple purposes. Existing inventions do not provide effective means and mechanisms to enable the geothermal high temperatures to be converted into reusable energy without harming the earth's interior or the environment. More importantly, this invention provides an ecologically and environmentally friendly source of energy that is in constant supply and that which could be used indefinitely without placing any constraints on existing resources.

### SUMMARY OF THE INVENTIONS:

According to an aspect of the invention, there is provided a geothermal system as recited in Claim 1. Optional features of the invention are recited in the dependent claims.

The present invention comprising of the **ISAAKIDIS HIGH TEMPRATURE ENGINEERED GEOTHERMAL SYSTEMS** include four types of devices to be installed deep below or anywhere beneath the earth's surface (3 metres to 13 kilometres underground), namely:
1. ISAAKIDIS ENGINEERED GEOTHERMAL **SPIRAL ENERGY HARNESSING CHAMBER** SYSTEM.
2. ISAAKIDIS ENGINEERED GEOTHERMAL **SINGLE ENERGY HARNESSING CHAMBER** SYSTEM.
3. ISAAKIDIS ENGINEERED GEOTHERMAL **PARALLEL ENERGY HARNESSING CHAMBER** SYSTEM.
4. ISAAKIDIS ENGINEERED GEOTHERMAL **RETURN OUTLET PRESSURISED PIPE/CHAMBER SYSTEM**

### PREFERRED ASPECTS OF THE INVENTIONS:

The ISAAKIDIS ENGINEERED GEOTHERMAL **SPIRAL ENERGY HARNESSING CHAMBER** SYSTEM, the ISAAKIDIS ENGINEERED GEOTHERMAL **SINGLE ENERGY HARNESSING CHAMBER** SYSTEM and the ISAAKIDIS ENGINEERED GEOTHERMAL **PARALLEL ENERGY HARNESSING CHAMBER** SYSTEM would enable liquids, gas or other material to be conveyed from above the earth's surface to the engineered geothermal systems. The inventions provide for the three geothermal energy **HARNESSING** systems to be interchangeable that would enable the three geothermal energy harnessing systems to operate either independently, or in series, or as interchangeable or in a combination of the other energy harnessing systems through a hybrid structure whereby the three systems are used to harness the geothermal energy. The ISAAKIDIS ENGINEERED GEOTHERMAL **RETURN OUTLET PIPE/CHAMBER** SYSTEM enables the harnessed/trapped energy, gases, pressure and or geo-thermally heated material to be conveyed or expelled to the surface of the earth. The geo-thermally heated material may be used for any purpose on the earth's surface and re-circulated through the Inlet Pipe/Chamber to be re-conveyed to the earth's interior. The four systems are described in detail below.

### BRIEF DESCRIPTION OF THE DRAWINGS:

The drawings are presented in four separate drawings for:
1. ISAAKIDIS ENGINEERED GEOTHERMAL **SPIRAL ENERGY HARNESSING CHAMBER** SYSTEM
2. ISAAKIDIS ENGINEERED GEOTHERMAL **SINGLE ENERGY HARNESSING CHAMBER** SYSTEM.
3. ISAAKIDIS ENGINEERED GEOTHERMAL **PARALLEL ENERGY HARNESSING CHAMBER** SYSTEM.
4. ISAAKIDIS ENGINEERED GEOTHERMAL **RETURN OUTLET PIPE/CHAMBER** SYSTEM

The four separate drawings depict the three GEOTHERMAL **ENERGY HARNESSING SYSTEMS** and the fourth diagram depicts the **RETURN OUTLET PIPE/CHAMBER** SYSTEM that would channel the energy, gases, pressure and other material from the energy harnessing devices deep below or anywhere beneath the earth to the surface of the earth to be utilised for a myriad of uses.
Diagram 1 is a cross sectional view of the **SPIRAL ENERGY HARNESSING CHAMBER SYSTEM** of the **ISAAKIDIS HIGH TEMPRATURE ENGINEERED GEOTHERMAL SYSTEMS** in accordance with this invention.
Diagram 2 is a cross sectional view of the **SINGLE ENERGY HARNESSING CHAMBER SYSTEM** of the **ISAAKIDIS HIGH TEMPRATURE ENGINEERED GEOTHERMAL SYSTEMS** in accordance with this invention.
Diagram 3 is a cross sectional view of the **PARALLEL ENERGY HARNESSING CHAMBER SYSTEM** of the **ISAAKIDIS HIGH TEMPRATURE ENGINEERED GEOTHERMAL SYSTEMS** in accordance with this invention.
Diagram 4 is a cross sectional view of the **RETURN OUTLET PIPE/CHAMBER SYSTEM** of the **ISAAKIDIS HIGH TEMPRATURE ENGINEERED GEOTHERMAL SYSTEMS**.

### INTEGER LIST

### DIAGRAM 1

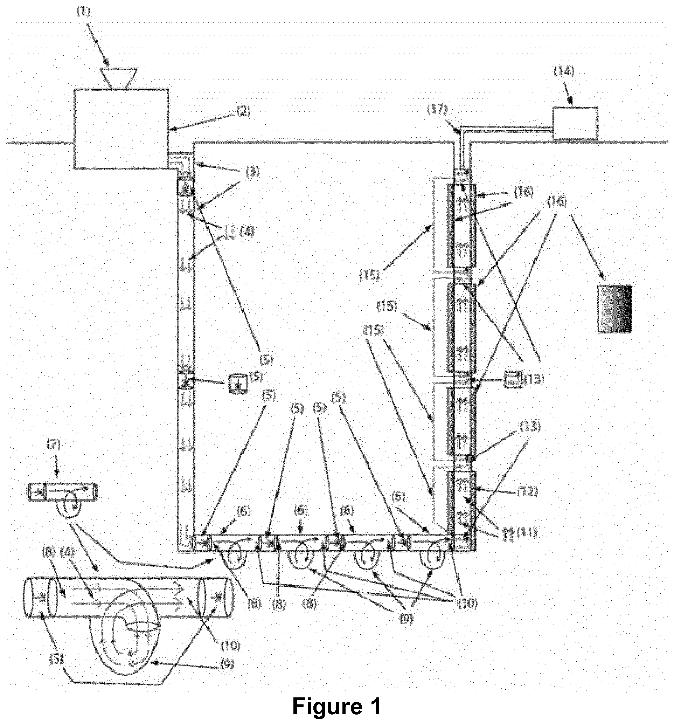

Diagram 1 is a cross sectional view of the **SPIRAL ENERGY HARNESSING CHAMBER SYSTEM** in accordance with this invention.

### DIAGRAM 1

1) Gas/Liquid/Material inlet.
2) Gas/Liquid/Material reservoir.
3) Gas/Liquid/Material inlet **PIPE/CHAMBER**.
4) Force of gravity.
5) One directional Force control valve.
6) Series of spiral cylindrical barrel shaped chambers.
7) Spiral cylindrical barrel shaped chamber.
8) Inlet into chamber.
9) Curved base of chamber to direct heating gas/liquid/material towards outlet in chamber.
10) Outlet from chamber.
11) Heated gas/steam/liquid/material entering outlet return **PIPE/CHAMBER**.
12) Return Outlet **PIPE/CHAMBER.**
13) PSIA one directional control valve Inlet/Outlet.
14) Energy converting plant.
15) Return Pressurised Outlet Pipe/Chambers.
16) Insulation.
17) High Pressurised Material Outlet Pipe.

### DIAGRAM 2

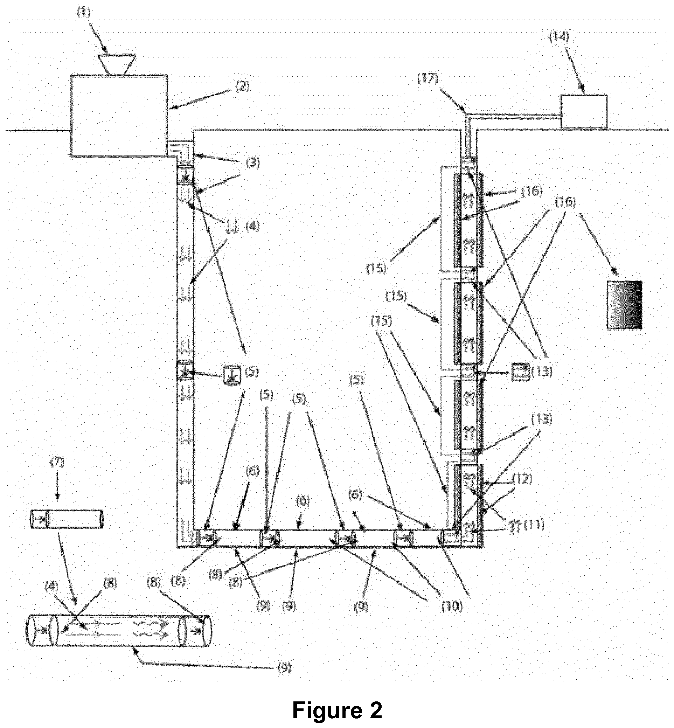

Diagram 2 is a cross sectional view of the **SINGLE ENERGY HARNESSING CHAMBER** SYSTEM in accordance with this invention.

### DIAGRAM 2

1. Gas, Liquid/Material inlet.
2. Gas/Liquid/Material reservoir.
3. Gas/Liquid/Material inlet **PIPE/CHAMBER**.
4. Force of gravity.
5. One directional Force control valve.
6. Series of cylindrical shaped chambers.
7. Cylindrical shaped chamber.
8. Inlet into chamber.
9. Straight base of chamber to direct heating gas/liquid/material towards outlet in chamber.
10. Outlet from chamber.
11. Heated gas/steam/liquid/material entering outlet return **PIPE/CHAMBER**.
12. Return Outlet **PIPE/CHAMBER**.
13. PSIA one directional control valve Inlet/Outlet.
14. Energy converting plant.
15. Return Pressurised Outlet Pipe/Chambers.
16. Insulation.
17. High Pressurised Material Outlet Pipe.

### DIAGRAM 3

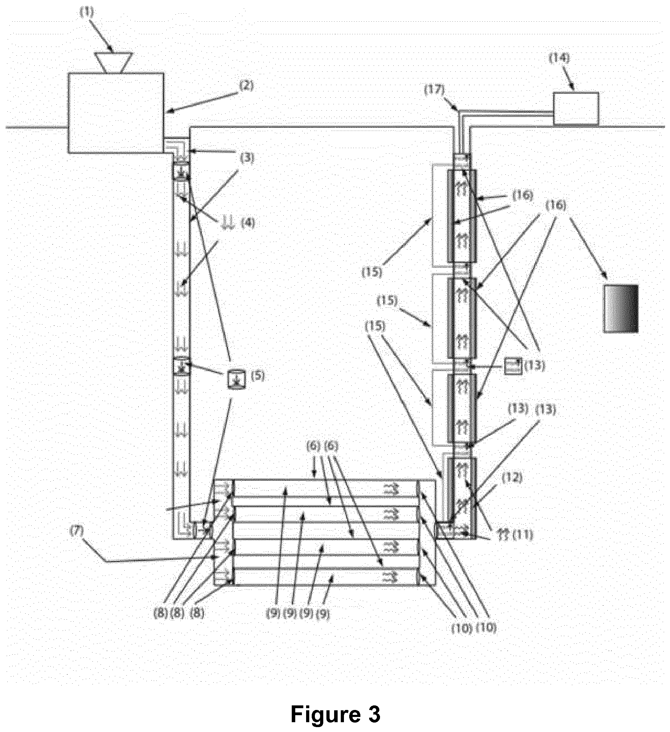

Diagram 3 is a cross sectional view of the **PARALLEL ENERGY HARNESSING CHAMBER SYSTEM** in accordance with this invention.

### DIAGRAM 3

1) Gas/Liquid/Material inlet.
2) Gas/Liquid/Material reservoir.
3) Gas/Liquid/Material inlet **PIPE/CHAMBER**.
4) Force of gravity.
5) One directional Force control valve.
6) Series of parallel chambers.
7) Parallel cylindrical shaped chamber.
8) Inlet into chamber.
9) Straight base of chamber to direct heating gas/liquid/material towards outlet in chamber.
10) Outlet from chamber.
11) Heated gas/steam/liquid/material entering outlet return **PIPE/CHAMBER**.
12) Return Outlet **PIPE/CHAMBER**.
13) PSIA one directional control valve Inlet/Outlet.
14) Energy converting plant.
15) Return Pressurised Outlet Pipe/Chambers.
16) Insulation.
17) High Pressurised Material Outlet Pipe.

### DIAGRAM 4

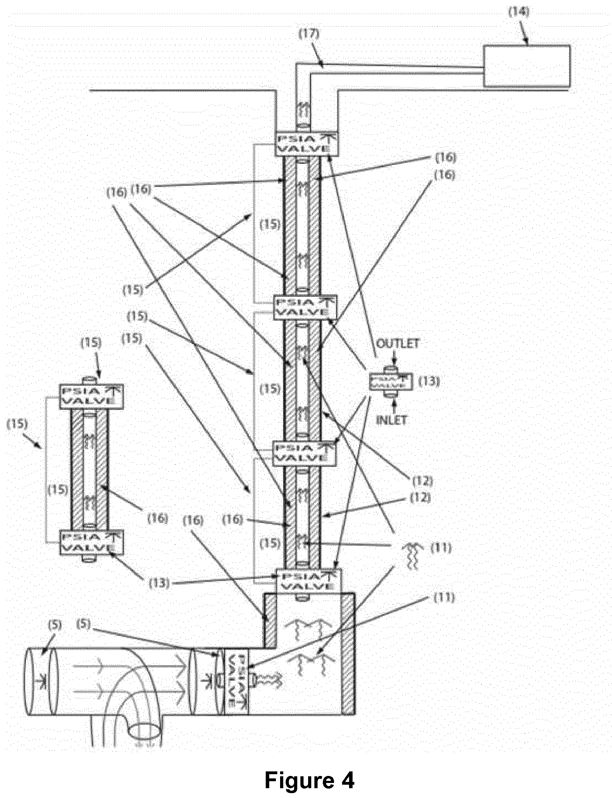

Diagram 4 is a cross sectional view of the **RETURN OUTLET PRESSURISED PIPE/CHAMBERS SYSTEM.**

### DIAGRAM 4

11. Heated gas/steam/liquid/material entering outlet return **PIPE/CHAMBER.**
12. Return Outlet **PIPE/CHAMBER.**
13. PSIA one directional control valve inlet/outlet.
14. Energy converting plant.
15. Return Pressurised Outlet Pipe/Chambers.
16. Insulation.
17. High Pressurised Material Outlet Pipe.

### DETAILED DESCRIPTION WITH RESPECT TO THE FOUR DRAWINGS:

### A: - SPIRAL ENERGY HARNESSING CHAMBER SYSTEM

### Diagram 1:

Diagram 1 is a cross sectional view of the **SPIRAL ENERGY HARNESSING CHAMBER SYSTEM** in accordance with this invention showing three dimensional view.

### DIAGRAM 1

1) Gas/Liquid/Material inlet.
2) Gas/Liquid/Material reservoir.
3) Gas/Liquid/Material inlet **PIPE/CHAMBER**.
4) Force of gravity.
5) One directional Force control valve.
6) Series of spiral cylindrical barrel shaped chambers.
7) Spiral cylindrical barrel shaped chamber.
8) Inlet into chamber.
9) Curved base of chamber to direct heating gas/liquid/material towards outlet in chamber.
10) Outlet from chamber.
11) Heated gas/steam/liquid/material entering outlet return **PIPE/CHAMBER.**
12) Return Outlet **PIPE/CHAMBER.**
13) PSIA one directional control valve Inlet/Outlet.
14) Energy converting plant.
15) Return Pressurised Outlet Pipe/Chambers.
16) Insulation.
17) High Pressurised Material Outlet Pipe.

### 1. Gas/Liquid/Material inlet.

The inlet is an opening that allows for gas, liquid or any other material to be conveyed and directed into the reservoir.

### 2. Gas/Liquid/Material reservoir.

The reservoir provides a storage facility for the gas, liquids or any other material. The reservoir may be erected above the earth's surface or partly above the ground or totally below the earth's surface. The reservoir may be built using concrete, metal, or any other matter depending on the type of material to be stored therein.

### 3. Gas/Liquid/Material inlet PIPE/CHAMBER.

The inlet **PIPE/CHAMBER** may be constructed using material suitable for the safe passage of the gas, liquids or other material. The inlet **PIPE/CHAMBER** will provide for the downward passage of the gas, liquids or other material assisted by the force of gravity. The inlet **PIPE/CHAMBER** connects the reservoir to the energy-harnessing chamber situated at the bottom of the Isaakidis High Temperature Engineered Geothermal System. The inlet **PIPE/CHAMBER** will convey the gas, liquids or other materials in their natural state to the energy-harnessing chamber prior to the application of any geothermal energy harnessed in the chamber.

### 4. Force of gravity.

The Force of gravity is created in the inlet **PIPE/CHAMBER** connecting the reservoir close to the earth's surface to the energy-harnessing chamber. The energy-harnessing chamber is constructed deep below or anywhere in the earth's interior below the reservoir and inlet **PIPE/CHAMBER.** This allows for the natural downward passage for the gas, liquids and other materials to enter the energy-harnessing chamber using the force of gravity. This obviates the need to have the gas, liquids or other material pumped into the energy-harnessing chamber. A pump may be used to accelerate the rate of transport of material. In the case of gas, pressure from the reservoir or inlet (Indexed Item 1) would be applied to direct the gas to flow down the inlet

### PIPE/CHAMBER.

### 5. One directional Force control valve.

The one-directional force control valve enables the gas, liquids or other material to be conveyed in one direction only. The force of gravity allows the material in the inlet **PIPE/CHAMBER** to be conveyed downwards to the energy-harnessing chamber. The one-directional control valves prevent the gas, liquids or other material from returning in the opposite direction (upwards) towards the surface of the earth, OR in the opposite direction (backwards) towards the inlet **PIPE/CHAMBER.** The one-directional force control valve enables the material in the inlet **PIPE/CHAMBER** or in the **ENERGY HARNESSING CHAMBERS** to be conveyed in the direction as desired - namely from the earth's surface to and through the energy-harnessing chamber deep below or anywhere beneath the earth's surface.

The control valve enables the control of the volume of material entering and leaving each section of the inlet **PIPE/CHAMBER** and or the **ENERGY HARNESSING CHAMBERS**. The control valve may be used to control the speed and velocity of the material travelling through the inlet **PIPE/CHAMBER** or the **ENERGY HARNESSING CHAMBERS.** The control valve allows for the regulation of the passage of material entering the **ENERGY HARNESSING CHAMBERS** when leaving the inlet **PIPE/CHAMBER.** The control valve may be used to shut off or reduce supply in the inlet **PIPE/CHAMBER** or in the **ENERGY HARNESSING CHAMBERS** in the event of an emergency or during maintenance works.

### 6. Series of Spiral cylindrical barrel shaped chambers.

The series of cylindrical barrel shaped chambers connect a series of individual chambers to each other. The series of chambers connect the inlet **PIPE/CHAMBER** to the outlet **PIPE/CHAMBER** providing a medium wherein the geothermal energy may be harnessed. One directional force control valves separate each chamber in the series of chambers. The one-directional force control valve enables the gas, liquids or other material to be conveyed in one direction only.

The force of gravity and the pressure allows the material in the chamber to be conveyed in the energy-harnessing chamber towards the outlet in each chamber. The valves allow the material in each chamber to pass in the direction as desired - namely from the inlet into the chamber towards the outlet from chamber. The one-directional control valves prevent the gas, liquids or other material from returning in the opposite direction (backwards) towards the inlet into each chamber.

The control valve enables the control of the volume of material entering and leaving each chamber. The control valve may be used to control the speed and velocity of the material travelling through each chamber. The control valve allows for the regulation of the passage of material entering the energy-harnessing chamber, remaining in each chamber and when leaving the chamber. The control valve may be used to shut off or reduce supply in the chamber in the event of an emergency or during maintenance works.

### 7. Spiral cylindrical barrel shaped chamber.

The spiral cylindrical barrel shaped chamber is made of suitable material capable of conveying gas, liquids or other material through each chamber and withstanding the high temperature and pressure deep below or anywhere beneath the earth's surface. Each chamber has an inlet for entry of material and an outlet for material to exit. There is a one-directional control valve at the inlet into the chamber and another one-directional force valve at the outlet from chamber. The gas, liquid or other material enters the chamber through the inlet. The material in the chamber begins to heat through the exposure to the high temperature deep below or anywhere beneath the earth's surface. The chamber thereby harnesses the geothermal energy and converts the material in the chamber into gas, pressure and renewable energy. The converted gas, pressure and renewable energy leave the chamber and enter the next chamber where the process is repeated and the geothermal energy is increased. The chambers are inter-connected such that by the time the geothermal energy is about to leave the last chamber; the geothermal energy is sufficiently harnessed before it enters the outlet **PIPE/CHAMBER** connected to the last chamber in the series of chambers.

### 8. Inlet into Chamber.

The Inlet into Chamber is the entry point for the gas, liquid or other material that enters the **SPIRAL CYLINDRICAL BARREL SHAPED CHAMBER.** There is a one directional force control valve at the Entry into the **CYLINDRICAL BARREL SHAPED CHAMBER**. The one directional control valve allows the controlled movement of gas, liquid and other material to enter through the Inlet into **CYLINDRICAL BARREL SHAPED CHAMBER** thereby controlling the volume, velocity, temperature and duration of the gas, liquid and other material remaining in each chamber. The valves at each Inlet into Chamber prevents the gas, liquid and other materials from moving backwards into the inlet **PIPE/CHAMBER** or any of the energy harnessing chambers that are before the Inlet into Chamber. The Inlet into Chamber assisted by the valves allows the gas, liquid or other material to travel in one direction (forward) in each energy harnessing chamber.

### 9. Curved base of chamber to direct heating gas/liquid/material towards outlet in chamber.

The Curved base of Chamber allows for the smooth transition of gas, liquids or other material to be swirled or be re-directed in a circular vertical/horizontal clockwise motion channelling the material in the chamber towards the Outlet from Chamber. The Curved base Chamber further provides an increased area and a longer travel time for conducting the geothermal heat beneath the earth to be transferred to the gas, liquid and other material in the chamber. The Curved base Chamber also "traps" the gas, liquid or other material thereby prolonging its stay, extends the duration and covers a larger surface within the chamber thereby subjecting the material in the chamber to increased geothermal heat. Had there not been the Curved base Chamber, the material would have travelled speedily through the Chamber covering less surface area without the additional advantages of the Curved base Chamber. The process without the Curved base Chamber would not have exploited the full potential of harnessing the geothermal energy.

### 10. Outlet from chamber.

The Outlet from Chamber is the exit point for the gas, liquid or other material that leaves the **CYLINDRICAL BARREL SHAPED CHAMBER.** There is a one directional force control valve at the Outlet from the **CYLINDRICAL BARREL SHAPED CHAMBER.** The one directional control valve allows the controlled movement of gas, liquid and other material to leave through the Outlet from the **CYLINDRICAL BARREL SHAPED CHAMBER** thereby controlling the volume, velocity, temperature and duration of the gas, liquid and other material remaining in each chamber. The valves at each Outlet from Chamber allows and controls the volume and velocity of the gas, liquid and other materials exiting the chamber thereby controlling the duration that the material in the chamber require to be subjected to the geothermal energy. The Outlet from the Chamber assisted by the valves allows the gas, liquids or other material to travel in one direction (forward) into the next energy-harnessing chamber.

### 11. Heated gas/steam/liquid/material entering outlet return PIPE/CHAMBER.

The gas, liquids and other material that had been subjected to the geothermal heat harnessing chambers would be directed into the outlet **PIPE/CHAMBER** on leaving the last of the series of geothermal heat harnessing chambers. The temperature, volume and pressure is at its highest at this point of entry into the outlet return pipe. The geothermal temperature causes the pressure and volume of the gas to expand and to look for an escape route towards the PSIA one directional control valve.

### 12. Return Outlet PIPE/CHAMBER.

The Outlet Pipe/Chamber connects the geothermal heat harnessing chambers to the Energy Harnessing Plant erected above the earth's surface or partially above or below the ground or totally below the earth's surface. The Outlet Pipe/Chamber provides a passage to convey the geothermally heated material, pressure and gas to the surface of the earth. The Outlet Pipe/Chamber is made of suitable material to withstand high temperature, pressure and gases. The Outlet Pipe/Chamber may return backwards horizontally just above the Energy Harnessing Chambers towards the Inlet Pipe/Chambers. The Outlet Pipe then returns upwards vertically towards the earth's surface adjacent to the Inlet Pipe/Chamber thereby obviating the need for drilling a second hole for the Return Outlet Pipe Chamber.

### 13. PSIA one directional control valve Inlet/Outlet.

The PSIA (absolute pressure of the substance which would then include the atmospheric pressure) one directional control valve may be controlled to either let material enter or leave the Outlet Chamber.

The one-directional PSIA control valve enables the gas, liquids or other material to be conveyed in one direction only. The force of pressure allows the material in the **Outlet PIPE/CHAMBER** to be conveyed upwards to the energy-harnessing plant erected on the earth's surface. The one-directional PSIA valves prevent the gas, liquids or other material from returning in the opposite direction (downwards) towards the earth's interior, OR in the towards the Energy Harnessing Chambers. The one-directional PSIA valve enables the material in the Outlet **PIPE/CHAMBER** to be conveyed in the direction as desired - namely from the earth's interior to and through the Outlet Pipe/Chambers towards the earth's surface.

The PSIA valve enables the control and regulation of the pressure entering and leaving each section of the Outlet **PIPE/CHAMBER.** The PSIA valve may be used to control the volume of the material travelling through the Outlet **PIPE/CHAMBER**. The PSIA valve allows for the regulation of the Pressure and volume of geothermally heated material entering and leaving the Outlet **PIPE/CHAMBER.** The control valve may be used to shut off or reduce pressure or supply of geothermally heated material in the Outlet **PIPE/CHAMBER** in the event of an emergency or during maintenance works.

### 14. Energy Converting plant.

The Energy converting Plant is erected above ground or close to the earth's surface. The geothermal energy conveyed to the earth's surface may be utilised for multi-purposes including:
a) Generating electricity;
b) Using heated liquid/material in the process to refine oil in the petroleum industry or refine any other material;
c) Creating steam/geothermally heated material to produce linear or rotary motion;
d) Creating geothermally heated material, air or gas pressure to produce linear or rotary motion;
e) Creating geothermally heated material and hydraulic pressure to produce linear or rotary motion;
f) Creating geothermally heated material and pneumatic pressure to produce linear or rotary motion;
g) Creating geothermal ENERGY or gas or pressure or a suitable medium/material for any domestic or industrial use.

### 15 Return Pressurised Outlet Pipe/Chambers.

The Return Outlet Pipe/Chamber has inlet/outlet PSIA valves at intervals. These valves separate and create a series of Return Pressurised Outlet Chambers within the Return Outlet Pipe/Chamber. Each Return Pressurised Outlet Chamber has inlet/outlet PSIA valves on both sides (horizontal) or on the top and bottom (vertical). A series of these pressurised chambers form the Return Outlet Pipe/Chamber, which may be vertical or horizontal.

The geothermally heated pressurised gas/steam/liquid or any other material would *enter* the Return Pressurised Outlet Chamber through the PSIA valve acting as an *inlet* valve and remains in the Return Pressurised Outlet Chamber. The *inlet* PSIA valve controls and regulates the volume and pressure of the heated material *entering* the Chamber. The constant flow of the heated material creates an increased pressure in the Chamber. The *outlet* PSIA valve at the other end of the Chamber would control and regulate the volume and pressure of the material *leaving* the Chamber.

The material on leaving the Chamber would immediately enter the next Chamber through the *same* PSIA valve, which now acts as an *inlet* PSIA valve at the entry point of the adjacent Chamber. The PSIA valves acting as inlet or outlet valves connect each chamber. The process is repeated in each Chamber. The geothermally heated material is thus conveyed from deep below or anywhere in the earth's interior to the earth's surface using the harnessed geothermal energy and regulating the upward movement through the PSIA valves.

### 16 Insulation

The insulation may be made of any material capable of retaining heat in the Return Outlet Pipe/Chamber.

### 17 High Pressurised Material Outlet Pipe

The High Pressure Material Outlet Pipe would be made of suitable material that can withstand high pressure, high volume and high temperature. This Pipe connects the Return Outlet Pipe/Chamber on the earth's surface to the Energy Converting Plant. This Pipe is also insulated and may be reconnected to the Inlet Pipe on the earth's surface thereby providing for the geothermally heated material to be re-circulated and re-used through the entire geo-thermal heat harnessing process.

### B: - SINGLE ENERGY HARNESSING CHAMBER SYSTEM

### Diagram 2:

Diagram 2 is a cross sectional view of the **SINGLE ENERGY HARNESSING CHAMBER SYSTEM** in accordance with this invention showing three dimensional view.

### DIAGRAM 2

1. Gas/Liquid/Material inlet.
2. Gas/Liquid/Material reservoir.
3. Gas/Liquid/Material inlet **PIPE/CHAMBER.**
4. Force of gravity.
5. One directional Force control valve.
6. Series of cylindrical shaped chambers.
7. Cylindrical shaped chamber.
8. Inlet into chamber.
9. Straight base of chamber to direct heating gas/liquid/material towards outlet in chamber.
10. Outlet from chamber.
11. Heated gas/steam/liquid/material entering outlet return **PIPE/CHAMBER**.
12. Return Outlet **PIPE/CHAMBER**.
13. PSIA one directional control valve Inlet/Outlet.
14. Energy Converting plant.
15. Return Pressurised Outlet Chambers.
16. Insulation.
17. High Pressurised Material Outlet Pipe.

### 1. Gas/Liquid/Material inlet.

The inlet is an opening that allows for gas, liquid or any other material to be conveyed into the reservoir.

### 2. Gas/Liquid/Material reservoir.

The reservoir provides a storage facility for the gas, liquids or any other material. The reservoir may be erected above the earth's surface or partly above the ground or totally below the earth's surface. The reservoir may be built using concrete, metal, or any other matter depending on the type of material to be stored therein.

### 3. Gas/Liquid/Material inlet PIPE/CHAMBER.

The inlet **PIPE/CHAMBER** may be constructed using material suitable for the safe passage of the gas, liquids or other material. The inlet **PIPE/CHAMBER** will provide for the downward passage of the gas, liquids or other material assisted by the force of gravity. The inlet **PIPE/CHAMBER** connects the reservoir to the energy-harnessing chamber situated at the bottom of the Isaakidis High Temperature Engineered Geothermal System. The inlet **PIPE/CHAMBER** will convey the gas, liquids or other materials in their natural state to the energy-harnessing chamber prior to the application of any geothermal energy harnessed in the chamber.

### 4. Force of gravity.

The Force of gravity is created in the inlet **PIPE/CHAMBER** connecting the reservoir close to the earth's surface to the energy-harnessing chamber. The energy-harnessing chamber is constructed deep below or anywherein the earth's interior below the reservoir and inlet **PIPE/CHAMBER**. This allows for the natural downward passage for the gas, liquids and other materials to enter the energy-harnessing chamber using the force of gravity. This obviates the need to have the gas, liquids or other material pumped into the energy-harnessing chamber. In the case of gas, pressure from the reservoir or inlet (Indexed Item 1) would be applied to direct the gas to flow down the inlet **PIPE/CHAMBER**.

### 5. One directional Force control valve.

The one-directional force control valve enables the gas, liquids or other material to be conveyed in one direction only. The force of gravity allows the material in the inlet **PIPE/CHAMBER** to be conveyed downwards to the energy-harnessing chamber. The one-directional control valves prevent the gas, liquids or other material from returning in the opposite direction (upwards) towards the surface of the earth, OR in the opposite direction (backwards) towards the inlet **PIPE/CHAMBER**. The one-directional force control valve enables the material in the inlet **PIPE/CHAMBER** or in the **ENERGY HARNESSING CHAMBERS** to be conveyed in the direction as desired - namely from the earth's surface to and through the energy-harnessing chamber deep below or anywhere beneath the earth's surface.

The control valve enables the control of the volume of material entering and leaving each section of the inlet **PIPE/CHAMBER** and or the **ENERGY HARNESSING CHAMBERS**. The control valve may be used to control the speed and velocity of the material travelling through the inlet **PIPE/CHAMBER** or the **ENERGY HARNESSING CHAMBERS**. The control valve allows for the regulation of the passage of material entering the **ENERGY HARNESSING CHAMBERS** when leaving the inlet **PIPE/CHAMBER**. The control valve may be used to shut off or reduce supply in the inlet **PIPE/CHAMBER** or in the **ENERGY HARNESSING CHAMBERS** in the event of an emergency or during maintenance works.

### 6. Series of cylindrical shaped chambers.

The series of cylindrical shaped chambers connect a series of individual chambers to each other. The series of chambers connect the inlet **PIPE/CHAMBER** to the outlet **PIPE/CHAMBER** providing a medium wherein the geothermal energy may be harnessed. One directional force control valves separate each chamber in the series of chambers. The one-directional force control valve enables the gas, liquids or other material to be conveyed in one direction only.

The force of gravity and the pressure allows the material in the chamber to be conveyed in the energy-harnessing chamber towards the outlet in each chamber. The valves allow the material in each chamber to pass in the direction as desired - namely from the inlet into the chamber towards the outlet from chamber. The one-directional control valves prevent the gas, liquids or other material from returning in the opposite direction (backwards) towards the inlet into each chamber.

The control valve enables the control of the volume of material entering and leaving each chamber. The control valve may be used to control the speed and velocity of the material travelling through each chamber. The control valve allows for the regulation of the passage of material entering the energy-harnessing chamber, remaining in each chamber and when leaving the chamber. The control valve may be used to shut off or reduce supply in the chamber in the event of an emergency or during maintenance works.

### 7. Cylindrical shaped chamber.

The cylindrical shaped chamber is made of suitable material capable of conveying gas, liquids or other material through each chamber and withstanding the high temperature and pressure deep below or anywhere beneath the earth's surface. Each chamber has an inlet for entry of material and an outlet for material to exit. There is a one-directional control valve at the inlet into the chamber and another one-directional force valve at the outlet from chamber. The gas, liquid or other material enters the chamber through the inlet. The material in the chamber begins to heat through the exposure to the high temperature deep below or anywhere beneath the earth's surface. The chamber thereby harnesses the geothermal energy and converts the material in the chamber into gas, pressure and renewable energy. The converted gas, pressure and renewable energy leave the chamber and enter the next chamber where the process is repeated and the geothermal energy is increased. The chambers are inter-connected such that by the time the geothermal energy is about to leave the last chamber; it is sufficiently harnessed before it enters the outlet **PIPE/CHAMBER** connected to the last chamber in the series of chambers.

### 8. Inlet into Chamber.

The Inlet into Chamber is the entry point for the gas, liquid or other material that enters the **CYLINDRICAL \SHAPED CHAMBER**. There is a one directional force control valve at the Entry into the **CYLINDRICAL SHAPED CHAMBER**. The one directional control valve allows the controlled movement of gas, liquid and other material to enter through the Inlet into **CYLINDRICAL SHAPED CHAMBER** thereby controlling the volume, velocity, temperature and duration of the gas, liquid and other material remaining in each chamber. The valves at each Inlet into Chamber prevents the gas, liquid and other materials from moving backwards into the inlet **PIPE/CHAMBER** or any of the energy harnessing chambers that are before the Inlet into Chamber. The Inlet into Chamber assisted by the valves allows the gas, liquids or other material to travel in one direction (forward) in each energy-harnessing chamber.

### 9. Straight base of chamber to direct heating gas/liquid/material towards outlet in chamber.

The Straight base of Chamber allows for the smooth transition of gas, liquids or other material to flow in a straight motion channelling the material in the chamber towards the Outlet from the Chamber. The Straight base Chamber further provides an increased area and a longer travel time for conducting the geothermal heat beneath the earth to be transferred to the gas, liquid and other material in the chamber. The Straight base Chamber also "traps" the gas, liquid or other material thereby prolonging its stay, extends the duration and covers a larger surface within the chamber thereby subjecting the material in the chamber to increased geothermal energy. Had there not been the Straight base Chamber, the material would have travelled speedily through the Chamber covering less surface area without the additional advantages of the Straight base Chamber. The process without the Straight base Chamber would not have exploited the full potential of harnessing the geothermal energy.

### 10. Outlet from chamber.

The Outlet from Chamber is the exit point for the gas, liquid or other material that leaves the **CYLINDRICAL SHAPED CHAMBER**. There is a one directional force control valve at the Outlet from the **CYLINDRICAL SHAPED CHAMBER**. The one directional control valve allows the controlled movement of gas, liquid and other material to leave through the Outlet from the **CYLINDRICAL SHAPED CHAMBER** thereby controlling the volume, velocity, temperature and duration of the gas, liquid and other material remaining in each chamber. The valves at each Outlet from Chamber allows and controls the volume and velocity of the gas, liquid and other materials exiting the chamber thereby controlling the duration that the material in the chamber require to be subjected to the geothermal energy. The Outlet from the Chamber assisted by the valves allows the gas, liquids or other material to travel in one direction (forward) into the next energy-harnessing chamber.

### 11. Heated gas/steam/liquid/material entering outlet Return PIPE/CHAMBER.

The gas, liquids and other material that had been subjected to the geothermal heat harnessing chambers would be directed into the outlet **PIPE/CHAMBER** on leaving the last of the series of geothermal heat harnessing chambers. The temperature, volume and pressure is at its highest at this point of entry into the outlet return pipe. The geothermal temperature causes the pressure and volume of the gas to expand and to look for an escape route towards the PSIA one directional control valve.

### 12. Return Outlet PIPE/CHAMBER.

The Outlet Pipe/Chamber connects the geothermal heat harnessing chambers to the Energy Harnessing Plant erected above the earth's surface or partially above or below the ground or totally below the earth's surface. The Outlet Pipe/Chamber provides a passage to convey the geothermally heated material, pressure and gas to the surface of the earth. The Outlet Pipe/Chamber is made of suitable material to withstand high temperature, pressure and gases. The Outlet Pipe/Chamber may return backwards horizontally just above the Energy Harnessing Chambers towards the Inlet Pipe/Chambers. The Outlet Pipe then returns upwards vertically towards the earth's surface adjacent to the Inlet Pipe/Chamber thereby obviating the need for drilling a second hole for the Return Outlet Pipe Chamber.

### 13. PSIA one directional control valve Inlet/Outlet.

The PSIA (absolute pressure of the substance which would then include the atmospheric pressure) one directional control valve may be controlled to either let material enter or leave the Outlet Chamber.

The one-directional PSIA control valve enables the gas, liquids or other material to be conveyed in one direction only. The force of pressure allows the material in the **Outlet PIPE/CHAMBER** to be conveyed upwards to the energy-harnessing plant erected on the earth's surface. The one-directional PSIA valves prevent the gas, liquids or other material from returning in the opposite direction (downwards) towards the earth's interior, OR in the towards the Energy Harnessing Chambers. The one-directional PSIA valve enables the material in the Outlet **PIPE/CHAMBER** to be conveyed in the direction as desired - namely from the earth's interior to and through the Outlet Pipe/Chambers towards the earth's surface.

The PSIA valve enables the control and regulation of the pressure entering and leaving each section of the Outlet **PIPE/CHAMBER**. The PSIA valve may be used to control the volume of the material travelling through the Outlet **PIPE/CHAMBER.** The PSIA valve allows for the regulation of the Pressure and volume of geothermally heated material entering and leaving the Outlet **PIPE/CHAMBER**. The control valve may be used to shut off or reduce pressure or supply of geothermally heated material in the Outlet **PIPE/CHAMBER** in the event of an emergency or during maintenance works.

### 14. Energy Converting plant.

The Energy Converting Plant is erected above ground or close to the earth's surface. The energy conveyed to the earth's surface may be utilised for multi-purposes including:
a) Generating electricity;
b) Using heated liquid/material in the process to refine oil in the petroleum industry or refine any other material;
c) Creating steam/geothermally heated material to produce linear or rotary motion;
d) Creating geothermally heated material, air or gas pressure to produce linear or rotary motion;
e) Creating geothermally heated material and hydraulic pressure to produce linear or rotary motion;
f) Creating geothermally heated material and pneumatic pressure to produce linear or rotary motion;
g) Creating geothermal ENERGY or gas or pressure or a suitable medium/material for any domestic or industrial use.

### 15. Return Pressurised Outlet Pipe Chambers.

The Return Outlet Pipe/Chamber has inlet/outlet PSIA valves at intervals. These valves separate and create a series of Return Pressurised Outlet Chambers within the Return Outlet Pipe/Chamber. Each Return Pressurised Outlet Chamber has inlet/outlet PSIA valves on both sides (horizontal) or on the top and bottom (vertical). A series of these pressurised chambers form the Return Outlet Pipe/Chamber, which may be vertical or horizontal.

The geothermally heated pressurised gas/steam/liquid or any other material would *enter* the Return Pressurised Outlet Chamber through the PSIA valve acting as an *inlet* valve and remains in the Return Pressurised Outlet Chamber. The *inlet* PSIA valve controls and regulates the volume and pressure of the heated material *entering* the Chamber. The constant flow of the geothermally heated material creates an increased pressure in the Chamber. The *outlet* PSIA valve at the other end of the Chamber would control and regulate the volume and pressure of the material *leaving* the Chamber.

The material on leaving the Chamber would immediately enter the next Chamber through the *same* PSIA valve, which now acts as an *inlet* PSIA valve at the entry point of the adjacent Chamber. The PSIA valves acting as inlet or outlet valves connect each chamber. The process is repeated in each Chamber. The heated material is thus conveyed from deep below or anywhere in the earth's interior to the earth's surface using the harnessed geothermal energy and regulating the upward movement through the PSIA valves.

### 16. Insulation.

The insulation may be made of any material capable of retaining heat in the Return Outlet Pipe/Chamber.

### 17. High Pressurised Material Outlet Pipe.

The High Pressure Material Outlet Pipe would be made of suitable material that can withstand high pressure, high volume and high temperature. This Pipe connects the Return Outlet Pipe/Chamber on the earth's surface to the Energy Harnessing Plant. This Pipe is also insulated and may be reconnected to the Inlet Pipe on the earth's surface thereby providing for the geothermally heated material to be re-circulated and re-used through the entire geo-thermal heat harnessing process.

### C: - PARALLEL ENERGY HARNESSING CHAMBER SYSTEM

### Diagram 3:

Diagram 3 is a cross sectional view of the **PARALLEL ENERGY HARNESSING CHAMBER SYSTEM** in accordance with this invention showing three dimensional view.

### DIAGRAM 3

1) Gas/Liquid/Material inlet.
2) Gas/Liquid/Material reservoir.
3) Gas/Liquid/Material inlet **PIPE/CHAMBER.**
4) Force of gravity.
5) One directional Force control valve.
6) Series of **PARALLEL** chambers.
7) Parallel Cylindrical shaped chamber.
8) Inlet into chamber.
9) Straight base of chamber to direct heating gas/liquid/material towards outlet in chamber.
10) Outlet from chamber.
11) Heated gas/steam/liquid/material entering outlet return **PIPE/CHAMBER**.
12) Return Outlet **PIPE/CHAMBER.**
13) PSIA one directional control valve Inlet/Outlet.
14) Energy Converting plant.
15) Return Pressurised Outlet Pipe/Chambers.
16) Insulation.
17) High Pressurised Material Outlet Pipe.

### 1. Gas/Liquid/Material inlet.

The inlet is an opening that allows for gas, liquid or any other material to be directed into the reservoir.

### 2. Gas/Liquid/Material reservoir.

The reservoir provides a storage facility for the gas, liquids or any other material. The reservoir may be erected above the earth's surface or partly above the ground or totally below the earth's surface. The reservoir may be built using concrete, metal, or any other matter depending on the type of material to be stored therein.

### 3. Gas/Liquid/Material inlet PIPE/CHAMBER.

The inlet **PIPE/CHAMBER** may be constructed using material suitable for the safe passage of the gas, liquids or other material. The inlet **PIPE/CHAMBER** will provide for the downward passage of the gas, liquids or other material assisted by the force of gravity. The inlet **PIPE/CHAMBER** connects the reservoir to the energy-harnessing chamber situated at the bottom of the Isaakidis High Temperature Engineered Geothermal System comprising the **PARALLEL ENERGY HARNESSING CHAMBER SYSTEM**. The inlet **PIPE/CHAMBER** will convey the gas, liquids or other materials in their natural state to the energy-harnessing chamber prior to the application of any geothermal energy harnessed in the chamber.

### 4. Force of gravity.

The Force of gravity is created in the inlet **PIPE/CHAMBER** connecting the reservoir close to the earth's surface to the energy-harnessing chamber. The energy-harnessing chamber is constructed deep below or anywherein the earth's interior below the reservoir and inlet **PIPE/CHAMBER**. This allows for the natural downward passage for the gas, liquids and other materials to enter the energy-harnessing chamber using the force of gravity. This obviates the need to have the gas, liquids or other material pumped into the energy-harnessing chamber. In the case of gas, pressure from the reservoir or inlet (Indexed Item 1) would be applied to direct the gas to flow down the inlet **PIPE/CHAMBER.**

### 5. One directional Force control valve.

The one-directional force control valve enables the gas, liquids or other material to be directed in one direction only. The force of gravity allows the material in the inlet **PIPE/CHAMBER** to be conveyed downwards to the energy-harnessing chamber. The one-directional control valves prevent the gas, liquids or other material from returning in the opposite direction (upwards) towards the surface of the earth, OR in the opposite direction (backwards) towards the inlet **PIPE/CHAMBER**. The one-directional force control valve enables the material in the inlet **PIPE/CHAMBER** or in the **ENERGY HARNESSING CHAMBERS** to be conveyed in the direction as desired - namely from the earth's surface to and through the energy-harnessing chamber deep below or anywhere beneath the earth's surface.

The control valve enables the control of the volume of material entering and leaving each section of the inlet **PIPE/CHAMBER** and or the **ENERGY HARNESSING CHAMBERS**. The control valve may be used to control the speed and velocity of the material travelling through the inlet **PIPE/CHAMBER** or the **ENERGY HARNESSING CHAMBERS.** The control valve allows for the regulation of the passage of material entering the **ENERGY HARNESSING CHAMBERS** when leaving the inlet **PIPE/CHAMBER.** The control valve may be used to shut off or reduce supply in the inlet **PIPE/CHAMBER** or in the **ENERGY HARNESSING CHAMBERS** in the event of an emergency or during maintenance works.

### 6. Series of parallel chambers.

The series of **Parallel** chambers connect a series of individual chambers to each other. The series of chambers connect the inlet **PIPE/CHAMBER** to the outlet **PIPE/CHAMBER;** the series of chambers are in turn connected parallel to each series providing a medium wherein the geothermal energy may be harnessed. One directional force control valves separate each chamber in the series of chambers. The one-directional force control valve enables the gas, liquids or other material to be directed in one direction only.

The force of gravity and the pressure allows the material in the chamber to be conveyed in the energy-harnessing chamber towards the outlet in each chamber. The valves allow the material in each chamber to pass in the direction as desired - namely from the inlet into the chamber towards the outlet from chamber. The one-directional control valves prevent the gas, liquids or other material from returning in the opposite direction (backwards) towards the inlet into each chamber.

The control valve enables the control of the volume of material entering and leaving each chamber. The control valve may be used to control the speed and velocity of the material travelling through each chamber. The control valve allows for the regulation of the passage of material entering the energy-harnessing chamber, remaining in each chamber and when leaving the chamber. The control valve may be used to shut off or reduce supply in the chamber in the event of an emergency or during maintenance works.

### 7. Parallel Cylindrical shaped chamber.

The cylindrical shaped chamber is made of suitable material capable of conveying gas, liquids or other material through each chamber and withstanding the high temperature and pressure deep below or anywhere beneath the earth's surface. Each chamber has an inlet for entry of material and an outlet for material to exit. There is a one-directional control valve at the inlet into the chamber and another one-directional force valve at the outlet from chamber. The gas, liquid or other material enters the chamber through the inlet. The material in the chamber begins to heat through the exposure to the high temperature deep below or anywhere beneath the earth's surface. The chamber thereby harnesses the geothermal energy and converts the material in the chamber into gas, pressure and renewable energy. The converted gas, pressure and renewable energy leave the chamber and enter the next chamber where the process is repeated and the geothermal energy is increased. The chambers are inter-connected in series. The series of interconnected chambers are in turn connected parallel to each series in such a way that by the time the geothermal energy is about to leave the last chamber; it is sufficiently harnessed before it enters the outlet **PIPE/CHAMBER** connected to the last chamber in the series of chambers connected parallel to each series.

### 8. Inlet into Chamber.

The Inlet into Chamber is the entry point for the gas, liquid or other material that enters the **PARALLEL CYLINDRICAL SHAPED CHAMBER**. There is a one directional force control valve at the Entry into the **PARALLEL CYLINDRICAL SHAPED CHAMBER**. The one directional control valve allows the controlled movement of gas, liquid and other material to enter through the Inlet into **PARALLEL CYLINDRICAL SHAPED CHAMBER** thereby controlling the volume, velocity, temperature and duration of the gas, liquid and other material remaining in each chamber. The valves at each Inlet into Chamber prevents the gas, liquid and other materials from moving backwards into the inlet **PIPE/CHAMBER** or any of the energy harnessing chambers that are before the Inlet into Chamber. The Inlet into Chamber assisted by the valves allows the gas, liquids or other material to travel in one direction (forward) in each energy-harnessing chamber.

### 9. Straight base of chamber to direct heating gas/liquid/material towards outlet in chamber.

The Straight base of Chamber allows for the smooth transition of gas, liquids or other material to flow in a straight motion channelling the material in the chamber towards the Outlet from the Chamber. The Straight base Chamber further provides an increased area and a longer travel time for conducting the geothermal heat beneath the earth to be transferred to the gas, liquid and other material in the chamber. The Straight base Chamber also "traps" the gas, liquid or other material thereby prolonging its stay, extends the duration and covers a larger surface within the chamber thereby subjecting the material in the chamber to increased geothermal energy. Had there not been the Straight base Chamber, the material would have travelled speedily through the Chamber covering less surface area without the additional advantages of the Straight base Chamber. The process without the Straight base Chamber would not have exploited the full potential of harnessing the geothermal energy.

### 10. Outlet from chamber.

The Outlet from Chamber is the exit point for the gas, liquid or other material that leaves the **PARALLEL CYLINDRICAL SHAPED CHAMBER**. There is a one directional force control valve at the Outlet from the **PARALLEL CYLINDRICAL SHAPED CHAMBER**. The one directional control valve allows the controlled movement of gas, liquid and other material to leave through the Outlet from the **PARALLEL CYLINDRICAL SHAPED CHAMBER** thereby controlling the volume, velocity, temperature and duration of the gas, liquid and other material remaining in each chamber. The valves at each Outlet from Chamber allows and controls the volume and velocity of the gas, liquid and other materials exiting the chamber thereby controlling the duration that the material in the chamber require to be subjected to the geothermal energy. The Outlet from the Chamber assisted by the valves allows the gas, liquids or other material to travel in one direction (forward) into the next energy-harnessing chamber.

### 11. Heated gas/steam/liquid/material entering outlet Return PIPE/CHAMBER.

The gas, liquids and other material that had been subjected to the geothermal heat harnessing chambers would be directed into the outlet **PIPE/CHAMBER** on leaving the last of the series of geothermal heat harnessing chambers. The temperature, volume and pressure is at its highest at this point of entry into the outlet return pipe. The geothermal temperature causes the pressure and volume of the gas to expand and to look for an escape route towards the PSIA one directional control valve.

### 12.Return Outlet PIPE/CHAMBER.

The Outlet Pipe/Chamber connects the geothermal heat harnessing chambers to the Energy Harnessing Plant erected above the earth's surface or partially above or below the ground or totally below the earth's surface. The Outlet Pipe/Chamber provides a passage to convey the geothermally heated material,, pressure and gas to the surface of the earth. The Outlet Pipe/Chamber is made of suitable material to withstand high temperature, pressure and gases. The Outlet Pipe/Chamber may return backwards horizontally just above the Energy Harnessing Chambers towards the Inlet Pipe/Chambers. The Outlet Pipe then returns upwards vertically towards the earth's surface adjacent to the Inlet Pipe/Chamber thereby obviating the need for drilling a second hole for the Return Outlet Pipe Chamber.

### 13. PSIA one directional control valve Inlet/Outlet.

The PSIA (absolute pressure of the substance which would then include the atmospheric pressure) one directional control valve may be controlled to either let geothermally heated material enter or leave the Outlet Chamber.

The one-directional PSIA control valve enables the gas, liquids or other material to be directed in one direction only. The force of pressure allows the material in the **Outlet PIPE/CHAMBER** to be conveyed upwards to the energy-harnessing plant erected on the earth's surface. The one-directional PSIA valves prevent the gas, liquids or other material from returning in the opposite direction (downwards) towards the earth's interior, OR in the towards the Energy Harnessing Chambers. The one-directional PSIA valve enables the material in the Outlet **PIPE/CHAMBER** to be conveyed in the direction as desired - namely from the earth's interior to and through the Outlet Pipe/Chambers towards the earth's surface.

The PSIA valve enables the control and regulation of the pressure entering and leaving each section of the Outlet **PIPE/CHAMBER.** The PSIA valve may be used to control the volume of the geothermally heated material travelling through the Outlet **PIPE/CHAMBER**. The PSIA valve allows for the regulation of the Pressure and volume of geothermally heated material entering and leaving the Outlet **PIPE/CHAMBER**. The control valve may be used to shut off or reduce pressure or supply of geothermally heated material in the Outlet **PIPE/CHAMBER** in the event of an emergency or during maintenance works.

### 14. Energy Converting Plant.

The geothermal Energy Converting Plant is erected above ground or close to the earth's surface. The geothermal energy conveyed to the earth's surface may be utilised for multi-purposes including:
1. Generating electricity;
2. Using heated liquids in the process to refine oil in the petroleum industry or refine any other materials;
3. Creating steam to produce linear or rotary motion;
4. Creating air or gas pressure to produce linear or rotary motion;
5. Creating hydraulic pressure to produce linear or rotary motion;
6. Creating pneumatic pressure to produce linear or rotary motion;
7. Creating ENERGY or gas or pressure or a suitable medium for any domestic or industrial use.

### 15.Return Pressurised Outlet Chambers.

The Return Outlet Pipe/Chamber has inlet/outlet PSIA valves at intervals. These valves separate and create a series of Return Pressurised Outlet Chambers within the Return Outlet Pipe/Chamber. Each Return Pressurised Outlet Chamber has inlet/outlet PSIA valves on both sides (horizontal) or on the top and bottom (vertical). A series of these pressurised chambers form the Return Outlet Pipe/Chamber, which may be vertical or horizontal.

The heated pressurised gas/steam/liquid or any other material would *enter* the Return Pressurised Outlet Chamber through the PSIA valve acting as an *inlet* valve and remains in the Return Pressurised Outlet Chamber. The *inlet* PSIA valve controls and regulates the volume and pressure of the heated material *entering* the Chamber. The constant flow of the heated material creates an increased pressure in the Chamber. The *outlet* PSIA valve at the other end of the Chamber would control and regulate the volume and pressure of the material *leaving* the Chamber.

The material on leaving the Chamber would immediately enter the next Chamber through the *same* PSIA valve, which now acts as an *inlet* PSIA valve at the entry point of the adjacent Chamber. The PSIA valves acting as inlet or outlet valves connect each chamber. The process is repeated in each Chamber. The heated material is thus conveyed from deep below or anywhere beneath the earth's interior to the earth's surface using the harnessed geothermal energy and regulating the upward movement through the PSIA valves.

### 16. Insulation.

The insulation may be made of any material capable of retaining heat in the Return Outlet Pipe/Chamber.

### 17. High Pressurised Material Outlet Pipe.

The High Pressure Material Outlet Pipe would be made of suitable material that can withstand high pressure, high volume and high temperature. This Pipe connects the Return Outlet Pipe/Chamber on the earth's surface to the Energy Harnessing Plant. This Pipe is also insulated and may be reconnected to the Inlet Pipe on the earth's surface thereby providing for the geothermally heated material to be re-circulated and re-used through the entire geo-thermal heat harnessing process.

### D: - RETURN OUTLET PRESSURISED CHAMBERS SYSTEM.

### Diagram 4:

Diagram 4 is a cross sectional view of the **RETURN OUTLET PRESSURISED CHAMBERS SYSTEM**.in accordance with this invention showing three-dimensional view.

### DIAGRAM 4

11. Heated gas/steam/liquid/material entering outlet return **PIPE/CHAMBER**.
12. Return Outlet **PIPE/CHAMBER**.
13. PSIA one directional control valve Inlet/Outlet.
14. Energy Converting plant.
15. Return Pressurised Outlet Chambers.
16. Insulation.
17. High Pressurised Material Outlet Pipe.

### 11. Heated gas/steam/liquid/material entering outlet Return PIPE/CHAMBER.

The gas, liquids and other material that had been subjected to the geothermal heat harnessing chambers would be directed into the outlet **PIPE/CHAMBER** on leaving the last of the series of geothermal heat harnessing chambers. The temperature, volume and pressure is at its highest at this point of entry into the outlet return pipe. The geothermal temperature causes the pressure and volume of the gas to expand and to look for an escape route towards the PSIA one directional control valve.

### 12.Return Outlet PIPE/CHAMBER.

The Outlet Pipe/Chamber connects the geothermal heat harnessing chambers to the Energy Harnessing Plant erected above the earth's surface or partially above or below the ground or totally below the earth's surface. The Outlet Pipe/Chamber provides a passage to convey the high temperature, pressure and gas to the surface of the earth. The Outlet Pipe/Chamber is made of suitable material to withstand high temperature, pressure and gases. The Outlet Pipe/Chamber may return backwards horizontally just above the Energy Harnessing Chambers towards the Inlet Pipe/Chambers. The Outlet Pipe then returns upwards vertically towards the earth's surface adjacent to the Inlet Pipe/Chamber thereby obviating the need for drilling a second hole for the Return Outlet Pipe Chamber.

### 13.PSIA one directional control valve Inlet/Outlet.

The PSIA (absolute pressure of the substance which would then include the atmospheric pressure) one directional control valve may be controlled to either let material enter or leave the Outlet Chamber.

The one-directional PSIA control valve enables the gas, liquids or other material to be directed in one direction only. The force of pressure allows the material in the **Outlet PIPE/CHAMBER** to be conveyed upwards to the energy-harnessing plant erected on the earth's surface. The one-directional PSIA valves prevent the gas, liquids or other material from returning in the opposite direction (downwards) towards the earth's interior, OR in the towards the Energy Harnessing Chambers. The one-directional PSIA valve enables the material in the Outlet **PIPE/CHAMBER** to be conveyed in the direction as desired - namely from the earth's interior to and through the Outlet Pipe/Chambers towards the earth's surface.

The PSIA valve enables the control and regulation of the pressure entering and leaving each section of the Outlet **PIPE/CHAMBER**. The PSIA valve may be used to control the volume of the material travelling through the Outlet **PIPE/CHAMBER**. The PSIA valve allows for the regulation of the Pressure and volume of material entering and leaving the Outlet **PIPE/CHAMBER.** The control valve may be used to shut off or reduce pressure or supply of material in the Outlet **PIPE/CHAMBER** in the event of an emergency or during maintenance works.

### 14. Energy Converting Plant.

The Energy Converting Plant is erected above ground or close to the earth's surface. The energy conveyed to the earth's surface may be utilised for multi-purposes including:
- Generating electricity;
- Using heated liquids in the process to refine oil in the petroleum industry or refine any other materials;
- Creating steam to produce linear or rotary motion;
- Creating air or gas pressure to produce linear or rotary motion;
- Creating hydraulic pressure to produce linear or rotary motion;
- Creating pneumatic pressure to produce linear or rotary motion;
- Creating ENERGY or gas or pressure or a suitable medium for any domestic or industrial use.

### 15. Return Pressurised Outlet Chambers.

The Return Outlet Pipe/Chamber has inlet/outlet PSIA valves at intervals. These valves separate and create a series of Return Pressurised Outlet Chambers within the Return Outlet Pipe/Chamber. Each Return Pressurised Outlet Chamber has inlet/outlet PSIA valves on both sides (horizontal) or on the top and bottom (vertical). A series of these pressurised chambers form the Return Outlet Pipe/Chamber, which may be vertical or horizontal.

The geothermally heated pressurised gas/steam/liquid or any other material would *enter* the Return Pressurised Outlet Chamber through the PSIA valve acting as an *inlet* valve and remains in the Return Pressurised Outlet Chamber. The *inlet* PSIA valve controls and regulates the volume and pressure of the geothermally heated material *entering* the Chamber. The constant flow of the geothermally heated material creates an increased pressure in the Chamber. The *outlet* PSIA valve at the other end of the Chamber would control and regulate the volume and pressure of the material *leaving* the Chamber.

The geothermally heated material on leaving the Chamber would immediately enter the next Chamber through the *same* PSIA valve, which now acts as an *inlet* PSIA valve at the entry point of the adjacent Chamber. The PSIA valves acting as inlet or outlet valves connect each chamber. The process is repeated in each Chamber. The geothermally heated material is thus conveyed from deep below or anywhere in the earth's interior to the earth's surface using the harnessed geothermal energy and regulating the upward movement through the PSIA valves.

### 16. Insulation.

The insulation may be made of any material capable of retaining heat in the Return Outlet Pipe/Chamber.

### 17. High Pressurised Material Outlet Pipe.

The High Pressure Material Outlet Pipe would be made of suitable material that can withstand high pressure, high volume and high temperature. This Pipe connects the Return Outlet Pipe/Chamber on the earth's surface to the Energy Converting Plant. This Pipe is also insulated and may be reconnected to the Inlet Pipe on the earth's surface thereby providing for the geothermally heated material to be re-circulated and re-used through the entire geo-thermal heat harnessing process.

## Claims

1. A geothermal system comprising: a spiral energy harnessing chamber system, a single energy harnessing chamber system, a parallel energy harnessing chamber system, or a hybrid structure of at least two of the spiral, single and parallel energy harnessing chamber systems;
the or each energy harnessing chamber system further comprising a reservoir (2), a reservoir outlet, an inlet pipe (3), one-directional control valves (5), energy harnessing chambers (7), a return outlet pipe (12), return pressurised outlet chambers (16), and a high pressurised material outlet pipe (17);
each energy harnessing chamber (7) being configured to allow geothermal heat from the earth's interior to be conducted and transferred to any material within each energy harnessing chamber (7);
means for conveying gas, liquids or any other material to the bottom end of the inlet pipe (3) from the reservoir (2) above, partly above or totally below the earth's surface to each energy harnessing chamber (7) deep below or anywhere in the earth's interior to be subjected to geothermal heating,
the control valves (5) being operable to control the speed, volume and velocity of material in the energy harnessing chambers (7) and the pipes that are inter-connected to allow the passage of liquid, gases or other material into and out of each energy harnessing chamber (7) or each pipe,
**characterised in that** the or each energy harnessing chamber system further comprises a series of energy harnessing chambers (6) connecting a series of the individual energy harnessing chambers (7) to each other, the series of energy harnessing chambers (6) connecting the inlet pipe (3) to the return outlet pipe (12) providing a medium wherein geothermal energy may be harnessed, wherein the one-directional force control valves (5) separate each energy harnessing chamber (7) in the series of energy harnessing chambers (6), the one-directional force control valves (5) enabling gas, liquid or other material to be conveyed in one direction only.

2. The geothermal system as defined in any of the preceding claims wherein the inlet pipe provides for the downward passage of the gas, liquids or other material assisted by the force of gravity, and
the inlet pipe (3) is configured to convey the gas, liquids or other materials from the reservoir (2) in their natural state to each energy harnessing chamber (7) prior to the application of any geothermal energy harnessed in each energy harnessing chamber (7).

3. The geothermal system as defined in any of the preceding claims wherein each energy harnessing chamber (7) of the spiral energy harnessing chamber system includes a curved base allowing for the smooth transition of gas, liquids or other material to swirl channelling the material in the energy harnessing chamber (7) towards the outlet (10) from the energy harnessing chamber (7), further providing an increased area.

4. The geothermal system as defined in any of the preceding claims wherein each energy harnessing chamber (7) of the single energy harnessing chamber system includes a straight base (9) that allows for the smooth transition of gas, liquids or other material to flow in a straight motion channelling the material in the energy harnessing chamber (7) towards an outlet (10) from the energy harnessing chamber (7).

5. The geothermal system as defined in any of the preceding claims wherein the parallel energy harnessing chamber system includes a series of parallel energy harnessing chambers (6).

6. The geothermal system as defined in any of the preceding claims wherein the return outlet pipe (12) has inlet/outlet control valves (13) at intervals that separate and create a series of return pressurised outlet chambers (16) within the return outlet pipe (12) into which geothermally heated gas, liquid or other material enters on leaving a last of a series of the energy harnessing chambers (6).

7. The geothermal system as defined in any of the preceding claims wherein the return pressurised outlet chambers (16) connects the return outlet pipe (12) on the earth's surface to an energy converting plant (14) through the high pressurised material outlet pipe (17).

8. The geothermal system as defined in Claim 7 wherein the high pressurised material outlet pipe (17) has a reducing diameter so as to retain pressure.

9. The geothermal system as defined in any of the preceding claims including means to enable the geo-thermally heated material to be re-circulated and re-used through the entire geothermal heat harnessing process.

## Patentansprüche

1. Geothermiesystem, Folgendes umfassend: ein System aus spiralförmigen energiegewinnenden Kammern, ein System aus einer einzelnen energiegewinnenden Kammer, ein System aus parallel angeordneten energiegewinnenden Kammern oder eine Hybridanordnung aus wenigstens zwei der Systeme aus den spiralförmigen, der einzelnen und den parallel angeordneten energiegewinnenden Kammern/Kammer;
wobei das oder jedes System aus energiegewinnenden Kammern ferner einen Sammelbehälter (2), einen Sammelbehälterauslass, eine Einlassleitung (3), Wege-Regelventile (5), energiegewinnende Kammern (7), eine Rücklaufauslassleitung (12), Druckrücklaufauslasskammern (16) und eine Hochdruckmaterialauslassleitung (17) umfasst;
wobei jede energiegewinnende Kammer (7) konfiguriert ist, zu ermöglichen, dass geothermische Wärme aus dem Erdinneren zu einem beliebigen Material in jeder energiegewinnenden Kammer (7) geleitet und übertragen wird;
Mittel zum Befördern von Gas, Flüssigkeiten oder beliebigem anderem Material hin zum unteren Ende der Einlassleitung (3) von dem Sammelbehälter (2) oberhalb, teilweise oberhalb oder vollständig unterhalb der Erdoberfläche zu jeder energiegewinnenden Kammer (7) viel weiter unten oder im Erdinneren, um geothermischer Erwärmung ausgesetzt zu werden,
wobei die Regelventile (5) funktionsfähig sind, um den Geschwindigkeitsbetrag, das Volumen und die Geschwindigkeit von Material in den energiegewinnenden Kammern (7) und den Leitungen, die miteinander verbunden sind, um das Durchströmen von Flüssigkeit, Gasen oder anderem Material in jede energiegewinnende Kammer (7) oder jede Leitung sowie aus diesen heraus zu ermöglichen, zu regeln,
**dadurch gekennzeichnet, dass** das oder jedes System aus energiegewinnenden Kammern ferner eine Reihe aus energiegewinnenden Kammern (6) umfasst, die eine Reihe der individuellen energiegewinnenden Kammern (7) miteinander verbindet, wobei die Reihe von energiegewinnenden Kammern (6), die die Einlassleitung (3) mit der Rücklaufauslassleitung (12) verbindet, ein Medium bereitstellt, in dem geothermische Energie gewonnen werden kann, wobei die Wege-Kraftregelventile (5) jede energiegewinnende Kammer (7) in der Reihe aus energiegewinnenden Kammern (6) abtrennt, wobei die Wege-Kraftregelventile (5) es ermöglichen, dass Gas, Flüssigkeit oder anderes Material in nur einer Richtung befördert wird.

2. Geothermiesystem nach einem der vorhergehenden Ansprüche, wobei die Einlassleitung die Strömung des Gases, der Flüssigkeiten oder des anderen Materials nach unten mit Unterstützung durch die Schwerkraft ermöglicht, und
die Einlassleitung (3) konfiguriert ist, das Gas, die Flüssigkeiten oder die anderen Materialien von dem Sammelbehälter (2) in ihrem natürlichen Zustand zu jeder energiegewinnenden Kammer (7) zu befördern, bevor jegliche in jeder energiegewinnenden Kammer (7) gewonnene geothermische Energie eingesetzt wird.

3. Geothermiesystem nach einem der vorhergehenden Ansprüche, wobei jede energiegewinnende Kammer (7) des Systems aus spiralförmigen energiegewinnenden Kammern eine gekrümmte Basis enthält, um den glatten Übergang von Gas, Flüssigkeiten oder anderem Material zu ermöglichen, um das Material in der energiegewinnenden Kammer (7) verwirbelnd von der energiegewinnenden Kammer (7) hin zum Auslass (10) zu leiten, wodurch ferner eine vergrößerte Fläche bereitgestellt wird.

4. Geothermiesystem nach einem der vorhergehenden Ansprüche, wobei jede energiegewinnende Kammer (7) des Systems mit einer einzelnen energiegewinnenden Kammer eine gerade Basis (9) enthält, die den glatten Übergang von Gas, Flüssigkeiten oder anderem Material ermöglicht, um mit einer geraden Bewegung zu strömen, um das Material in der energiegewinnenden Kammer (7) von der energiegewinnenden Kammer (7) aus zu einem Auslass (10) hin zu lenken.

5. Geothermiesystem nach einem der vorhergehenden Ansprüche, wobei das System mit parallel angeordneten energiegewinnenden Kammern eine Reihe von parallel angeordneten energiegewinnenden Kammern (6) enthält.

6. Geothermiesystem nach einem der vorhergehenden Ansprüche, wobei die Rücklaufauslassleitung (12) Einlass-/Auslassregelventile (13) in Intervallen aufweist, die eine Reihe von Druckrücklaufauslasskammern (16) innerhalb der Rücklaufauslassleitung (12) voneinander trennen und erzeugen, in welche geothermisch erwärmtes/erwärmte Gas, Flüssigkeit oder anderes Material beim Verlassen wenigstens einer Reihe der energiegewinnenden Kammern (6) eintritt.

7. Geothermiesystem nach einem der vorhergehenden Ansprüche, wobei die Druckrücklaufauslasskammern (16) die Rücklaufauslassleitung (12) auf der Erdoberfläche durch die Hochdruckmaterialauslassleitung (17) mit einer Energieumwandlungsanlage (14) verbinden.

8. Geothermiesystem nach Anspruch 7, wobei die Hochdruckmaterialauslassleitung (17) einen sich verjüngenden Durchmesser aufweist, um den Druck aufrecht zu erhalten.

9. Geothermiesystem nach einem der vorhergehenden Ansprüche, einschließlich Mittel zum Ermöglichen, dass das geothermisch erwärmte Material durch den gesamten Geothermiewärmegewinnungsvorgang umgewälzt und wiederverwendet wird.

## Revendications

1. Système géothermique comprenant : un système de chambre d'exploitation d'énergie en spirale, un système de chambre d'exploitation d'énergie unique, un système de chambre d'exploitation d'énergie parallèle ou une structure hybride d'au moins deux parmi les systèmes de chambre d'exploitation d'énergie en spirale, unique et parallèle ;
le ou chaque système de chambre d'exploitation d'énergie comprenant en outre un réservoir (2), un refoulement de réservoir, un tuyau d'admission (3), des vannes de régulation unidirectionnelle (5), des chambres d'exploitation d'énergie (7), des tuyaux de refoulement de retour (12), des chambres de refoulement sous pression de retour (16) et un tuyau de refoulement de matériau sous haute pression (17) ;
chaque chambre d'exploitation d'énergie (7) étant configurée pour permettre à de la chaleur géothermique provenant de l'intérieur de la terre d'être conduite et transférée vers tout matériau à l'intérieur de chaque chambre d'exploitation d'énergie (7) ;
un moyen pour transporter du gaz, des liquides ou tout autre matériau vers l'extrémité de fond du tuyau d'admission (3) à partir du réservoir (2) au-dessus, en partie au-dessus ou totalement en dessous de la surface de la terre vers chaque chambre d'exploitation d'énergie (7) bien en dessous ou partout à l'intérieur de la terre à soumettre à un chauffage géothermique,
les vannes de régulation (5) étant fonctionnelles pour réguler la vitesse, le volume et la vélocité du matériau dans les chambres d'exploitation d'énergie (7) et les tuyaux qui sont inter-reliés pour permettre le passage de liquide, de gaz ou d'autre matériau dans et en dehors de chaque chambre d'exploitation d'énergie (7) ou chaque tuyau,
**caractérisé en ce que** le ou chaque système de chambre d'exploitation d'énergie comprend en outre une série de chambres d'exploitation d'énergie (6) reliant entre elles une série des chambres d'exploitation d'énergie (7) individuelles, la série de chambres d'exploitation d'énergie (6) reliant le tuyau d'admission (3) au tuyau de refoulement de retour (12) fournissant un milieu où une énergie géothermique peut être exploitée, dans lequel les vannes de régulation de force unidirectionnelle (5) séparent chaque chambre d'exploitation d'énergie (7) en la série de chambres d'exploitation d'énergie (6), les vannes de régulation de force unidirectionnelle (5) permettant à du gaz, du liquide ou un autre matériau d'être transporté dans une direction uniquement.

2. Système géométrique selon l'une quelconque des revendications précédentes, dans lequel le tuyau d'admission fournit le passage vers le bas du gaz, des liquides ou d'un autre matériau assisté par la force de gravité, et
le tuyau d'admission (3) est configuré pour transporter le gaz, les liquides ou les autres matériaux à partir du réservoir (2) dans leur état naturel vers chaque chambre d'exploitation d'énergie (7) avant l'application de toute énergie géothermique exploitée dans chaque chambre d'exploitation d'énergie (7).

3. Système géothermique selon l'une quelconque des revendications précédentes, dans lequel chaque chambre d'exploitation d'énergie (7) du système de chambre d'exploitation d'énergie en spirale comporte une base incurvée permettant la transition régulière de gaz, de liquides ou d'autre matériau qui tourbillonnent en acheminant le matériau dans la chambre d'exploitation d'énergie (7) vers le refoulement (10) à partir de la chambre d'exploitation d'énergie (7), fournissant en outre une zone accrue.

4. Système géothermique selon l'une quelconque des revendications précédentes, dans lequel chaque chambre d'exploitation d'énergie (7) du système de chambre d'exploitation d'énergie unique comporte une base droite (9) qui permet la transition régulière de gaz, de liquides et d'autre matériau qui circulent selon un mouvement droit en acheminant le matériau dans la chambre d'exploitation d'énergie (7) vers un refoulement (10) à partir de la chambre d'exploitation d'énergie (7).

5. Système géothermique selon l'une quelconque des revendications précédentes, dans lequel le système de chambre d'exploitation d'énergie parallèle comporte une série de chambres d'exploitation d'énergie parallèles (6).

6. Système géothermique selon l'une quelconque des revendications précédentes, dans lequel le tuyau de refoulement de retour (12) comporte des vannes de régulation d'admission/de refoulement (13) à des intervalles qui séparent et créent une série de chambres de refoulement sous pression de retour (16) à l'intérieur du tuyau de refoulement de retour (12) dans lequel du gaz, du liquide ou un autre matériau chauffé géothermiquement entre, en sortant d'une dernière d'une série des chambres d'exploitation d'énergie (6).

7. Système géothermique selon l'une quelconque des revendications précédentes, dans lequel les chambres de refoulement sous pression de retour (16) relient le tuyau de refoulement de retour (12) sur la surface de la terre à une centrale de conversion d'énergie (14) par l'intermédiaire du tuyau de refoulement de matériau sous haute pression (17).

8. Système géothermique selon la revendication 7, dans lequel le tuyau de refoulement de matériau sous haute pression (17) a un diamètre qui diminue de façon à retenir la pression.

9. Système géothermique selon l'une quelconque des revendications précédentes, comportant un moyen pour permettre au matériau chauffé géothermiquement d'être remis en circulation et réutilisé par l'intermédiaire du procédé d'exploitation de chaleur géothermique entier.
